Europäisches Patentamt

European Patent Office

Office européen des brevets

(19)

(11) Veröffentlichungsnummer : **0 172 571**
**B1**

(12)

# EUROPÄISCHE PATENTSCHRIFT

(45) Veröffentlichungstag der Patentschrift :
24.01.90

(51) Int. Cl.⁵ : **B 23 B 31/20**

(21) Anmeldenummer : 85110522.1

(22) Anmeldetag : 21.08.85

(54) Spannfutter.

(30) Priorität : 24.08.84 DE 3431180

(43) Veröffentlichungstag der Anmeldung :
26.02.86 Patentblatt 86/09

(45) Bekanntmachung des Hinweises auf die Patenterteilung : 24.01.90 Patentblatt 90/04

(84) Benannte Vertragsstaaten :
AT BE CH FR IT LI NL SE

(56) Entgegenhaltungen :
EP--A-- 0 023 197
DD--A-- 42 462
DE--A-- 1 777 116
DE--A-- 2 638 433
DE--A-- 2 835 844
DE--A-- 3 008 333
FR--A-- 2 042 090

(73) Patentinhaber : Maschinenfabrik Reichenbacher
GmbH
Rosenauer Strasse 32
D-8635 Dörfles-Esbach (DE)

(72) Erfinder : **Reichenbacher, Winfried, Dipl.-Ing.**
**Von-Werthern-Strasse 8**
**D-8635 Dörfles-Esbach (DE)**
Erfinder : Beyer, Paul-Heinz
Hintere Saalfelder Strasse 7
D-8635 Dörfles-Esbach (DE)
Erfinder : Zarske, Wolfgang
Hennbergerstrasse 12
D-8632 Neustadt-Fürth a. Berg (DE)

(74) Vertreter : **Eitle, Werner, Dipl.-Ing. et al**
**Hoffmann, Eitle & Partner Patentanwälte Arabellas-**
**trasse 4**
**D-8000 München 81 (DE)**

**Beschreibung**

Die Erfindung bezieht sich auf ein Spannfutter für Holzbearbeitungswerkzeuge mit zylindrischen Schäften gemäß dem Oberbegriff des Anspruches 1.

Die für Holzbearbeitungsmaschinen verwendeten Werkzeuge weisen überwiegend einen zylindrischen Schaft auf. Daher weisen auch die Holzbearbeitungsmischinen überwiegend zylindrische Schaftaufnahmen mit Spannzange und Überwurfmutter auf. Der wesentliche Grund dafür ist, daß der zylindrische Schaft als auch die zylindrische Schaftaufnahme kostengünstiger herstellbar sind. Bekanntlich werden die Holzbearbeitungs-Werkzeuge mit einer sehr hohen Rotationsgeschwindigkeit (18.000 U/min.) angetrieben, wodurch eine extrem geringe Unwucht bei Aufnahme und Schaft sehr wichtig sind.

Schnellspannfutter mit zylindrischer Schaftaufnahme sind in der Holzbearbeitungsbranche nicht bekannt.

Schnellspannfutter sind jedoch im Werkzeugmaschinenbereich in unterschiedlichen Bauarten üblich. Konstruktionen mit beweglicher Spannzange werden allerdings nur zum Spannen zylindrischer Werkstücke eingesetzt. Es bandelt sich hierbei um Kraftspanner, die durch ihre Bauart nur geringe Drehzahlen zulassen.

Die in der Holzbearbeitung üblicherweise verwendeten, schon erwähnten Spannfutter weisen eine Spannzange auf, die in einer konischen Spannzangenaufnahme mit Hilfe einer Überwurfmutter axial verschiebbar und damit spann- und entspannbar ist. Die Spannzange weist eine zylindrische Aufnahmebohrung auf, in welche der zylindrische Schaft des Werkzeuges eingeschoben wird. Der Nachteil dieser bekannten Spannfutter besteht darin, daß eine Spindelarretierung erforderlich ist, da sonst mit zwei Händen drei Handhabungen durchzuführen sind. Die Spindel muß gegen Verdrehen gehalten, die Überwurfmutter auf- bzw. zugedreht und das Werkzeug gegen Herausfallen gehalten werden. Zudem ist der Werkzeugwechsel bei diesem Spannfutter zeitaufwendig, da die Überwurfmutter von Hand verspannt werden muß.

Aufgabe der Erfindung ist es, ein Spannfutter für Holzbearbeitungswerkzeuge mit zylindrischen Schäften anzugeben, welches als Schnellspannfutter verwendbar ist.

Diese Aufgabe wird erfindungsgemäß entsprechend Anspruch 1 dadurch gelöst, daß die Spannzange eine zylindrische Aufnahmebohrung aufweist und daß eine axial.

Bei Schnellwechselsystemen für Werkzeuge erfolgt die Aufnahme des jeweiligen Werkzeugs über einen Steilkegel. Hierbei wird der starre Werkzeug-Steilkegel über eine Zugstange in eine kegelige Spindelaufnahme gespannt. Ein solches Schnellspannfutter mit Steilkegelaufnahme und Zugstange ist aus der EP-A-0023197 bekannt. Diese Systeme erfordern größere Lagerinnendurchmesser für die Zugstangendurchführung, wodurch die maximale Drehzahl begrenzt wird. In der Holzbearbeitung liegen jedoch die Drehzahlen um ein Vielfaches über denen der Metallbearbeitung. Folglich sind Schnellwechselsysteme mit Steilkegeln an den herkömmlichen Holzbearbeitungsspindeln nicht verwendbar. Nur Spezialspindeln mit Wasserumlaufkühlung, Ölnebelschmierung und automatischer Spielnachstellung sind bei diesen Lagerabmessungen für die geforderten hohen Drehzahlen geeignet. Der Preis liegt deshalb gegenüber einer herkömmlichen Holzbearbeitungsspindel um ein Vielfaches höher.

Wirksame Feder angeordnet ist, die die Spannzange in die Spannzangenaufnahme gedrückt, also in gespanntem Zustand hält. Zum Entspannen, also Entnehmen des Werkzeuges muß der Federkraft entgegengewirkt und dadurch die Spannzange entspannt werden. Hierdurch ist der Vorteil gegeben, daß durch Zusammendrücken der Spannfeder die Spannzange entspannt und dadurch in einfacher Weise der Werkzeugschaft in die Spannzange eingeführt oder aus dieser entnommen werden kann. Es sind folglich nur noch zwei axiale Bewegungen bzw. Handhabungsbewegungen notwendig, nämlich das Zusammendrücken der Feder und das axiale Einschieben ober Herausziehen des Werkzeugschaftes aus der Spannzange. Diese beiden Handhabungen lassen sich daher auch in einfacher Weise in unterschiedlichsten Ausführungsvarianten verwirklichen. So kann die einfache manuelle Betätigung als auch der vollautomatische Werkzeugwechsel vorgenommen werden.

In einer ersten Ausführung kann das erfindungsgemäße Schnellspannfutter derart ausgebildet sein, daß die Feder sind das spannende sind entspannende Bauteil Teil einer Überwurfmutter sind, wobei die Überwurfmutter als auf die Spannzangenaufnahme aufschraubbarer einfach wirkender Ringzylinder ausgebildet ist. Dies bringt den großen Vorteil, daß das erfindungsgemäße Schnellspannfutter in einfacher und schneller Weise gegen ein herkömmliches Spannfutter mit Spannzange und Überwurfmutter durch einfaches Aufschrauben und Entfernen der herkömmlichen Überwurfmutter und Aufrauben der erfindungsgemäßen, als Ringzylinder aufgebauten Überwurfmutter, ausgetauscht werden kann.

Von Vorteil ist ferner, daß die Überwurfmutter aus einem auf die Spannzangenaufnahme aufschraubbaren Ringkörper besteht, in welchem ein Ringzylinderraum vorgesehen ist. In dem ringförmigen Zylinderraum ist ein als Ringkolben ausgebildeter Spannring, der mit der Spannzange zusammenwirkt, axial beweglich angeordnet. Dabei ist der Zylinderraum an seiner offenen Seite über einen Ringdeckel verschlossen, wobei zwischen Deckel und Spannring-Kolben die Druckfeder angeordnet ist. Zudem ist ein mit dem Spannring zusammenwirkender und diesen entgegen der Federkraft axial bewegender Entspannungsdruckring am Ringkörper angeordnet. Die Feder drückt über den Spannringkolben auf die Spannzange, diese in den Aufnahmekegel der Spannzangenaufnahme einschiebend, wodurch ein in der Spannzange befindlicher Werkzeugschaft festgespannt wird. Beim Entspannen des Schnellspannfutters wird der Entspannungsring axial verschoben, wodurch der Spannring-Kolben entgegen der Kraft der Feder gedruckt wird. Hierdurch wird die Spannzange entlastet und kann beispielsweise über einen bekannten Mitnahmering axial aus der Spannzangenaufnahme wieder herausgeschoben werden, wodurch die Spannzange entspannt und der Werkzeugschaft aus dieser entnommen werden kann.

Der Entspannungsdruckring kann dabei als ein auf den Mantel des Ringkörpers axial verschiebbarer und auf die der Feder abgewandten Fläche des Ringkolbens einwirkender Ring ausgebildet sein. Hierdurch wird eine relativ platzsparende Betätigungsmöglichkeit geschaffen, da ein solcher Entspannungsdruckring eine nur geringe Dicke aufzuweisen braucht.

Zwischen dem Entspannungsdruckring und dem Spann-Ringkolben können erfindungsgemäß unterschiedliche, ansich bekannte Kraftübertragungselemente vorgesehen sein. So kann eine hydraulische Übersetzung angeordnet sein. Diese kann in einfacher, vorteilhafter Weise dadurch realisiert sein, daß zwischen äußerer Mantelfläche des Ringkörpers und innerer Mantelfläche des Entspannungsdruckringes ein Ringraum vorgesehen ist, in welcher ein stufenförmiger Absatz des Entspannungsdruckringes hineinragt. Durch axiales Verschieben des Entspannungsdruckringes wird die in dem Ringraum befindliche Druckflüssigkeit komprimiert und durch entsprechende Verbindungsöffnungen in den Ringzylinderraum gedrückt, den Spann-Ringkolben entgegen der Federkraft verschiebend.

Als Kraftübertragungselement kann zwischen Entspannungsdruckring und Spannring jedoch auch jegliche mechanische Hebel- oder andere form- oder kraftschlüssige Konstruktion angeordnet sein.

Insbesondere durch die Anordnung der hydraulischen Übersetzung kann eine sehr einfache und sparsame, insbesondere platzsparende Konstruktion des erfindungsgemäßen Schnellspannfutters erzielt werden, die zudem sehr genau anspricht und eine gute Übertragung auch hoher Kräfte zuläßt.

Zur Verschiebung des Entspannungsdruckringes zwecks Entspannen der Spannzange können die unterschiedlichsten Konstruktionen verwendet werden. So kann eine manuelle Betätigung durch eine Hebelvorrichtung vorgesehen sein. Des weiteren kann eine pneumatische Betätigung mit einem angeflanschten Zylinder vorgenommen werden, wobei der Zylinder ein Ringzylinder ist, dessen ebenfalls zylindrisch ausgebildete Kolbenstange in die Mantelfläche des Entspannungsdruckringes eingreift. Es kann des weiteren eine mechanische Betätigung vorgesehen sein, beispielsweise mit einer Werkzeugwechselvorrichtung, die den Entspannungsdruckring axial verschiebt. Es kann auch die vertikale NC-Achse nach unten gegen ein feststehendes Werkzeugmagazin gefahren werden, wodurch ebenfalls die mechanische Betätigung bewirkt wird.

Schließlich ist von Vorteil, wenn die Druckfeder als Tellerfederpaket verwendet wird.

Weitere Vorteile des erfindungsgemäßen Spannfutters bestehen darin, daß in der Holzbearbeitung übliche Frässpindeln bzw. Fräsmotoren mit Spannzangenaufnahme und Überwurfmutter eingesetzt werden können, daß also keine Sonderausführung der Spindel notwendig ist. Bereits vorhandene Maschinen können durch einfaches Austauschen der Überwurfmutter mit einem erfindungsgemäßen Spannfutter nachgerüstet werden. Zudem sind keine zusätzlichen Aufnahmedorne für die Werkzeuge erforderlich und außerdem ist die kostengünstigste Werkzeugart verwendbar.

In der Holzbearbeitung einschließlich der zuständigen Umfallverhütungsorganisationen sind Werkzeugaufnahmen mit Morsekonus und Differenzialmutter für verschiedene Drehrichtung umstritten. Bei Spannzangenaufnahme mit Überwurfmutter gibt es bekanntlich keine Lösung für verschiedene Drehrichtungen auf dem Markt. Hier bringt die Erfindung Abhilfe, in dem sie beide Drehrichtungen ermöglicht.

Das Erfindungsgegenstand wird nachstehend anhand der in der beigefügten Zeichnung dargestellten Ausführungsbeispiele näher erläutert.

Es zeigt:

Figur 1 ein erfindungsgemäßes Schnellspannfutter in axialem Schnitt,

Figur 2 eine Draufsicht auf eine Hebelvorrichtung zur manuellen Betätigung des Spannfutter nach Figur 1,

Figur 3 eine schematische Darstellung einer mechanischen Betätigung mit einer Werkzeugwechseleinrichtung des Spannfutters nach Figur 1.

Figur 4 einen teilweisen Schnitt durch eine pneumatische Betätigung mit einem angeflanschten Zylinder des Spannfutters nach Figur 1, wird

Figur 5 eine schematische Darstellung einer mechanischen Betätigung des Spannfutters nach Figur 1 durch Fahren der vertikalen NC-Achse gegen ein feststehendes Werkzeugmagazin.

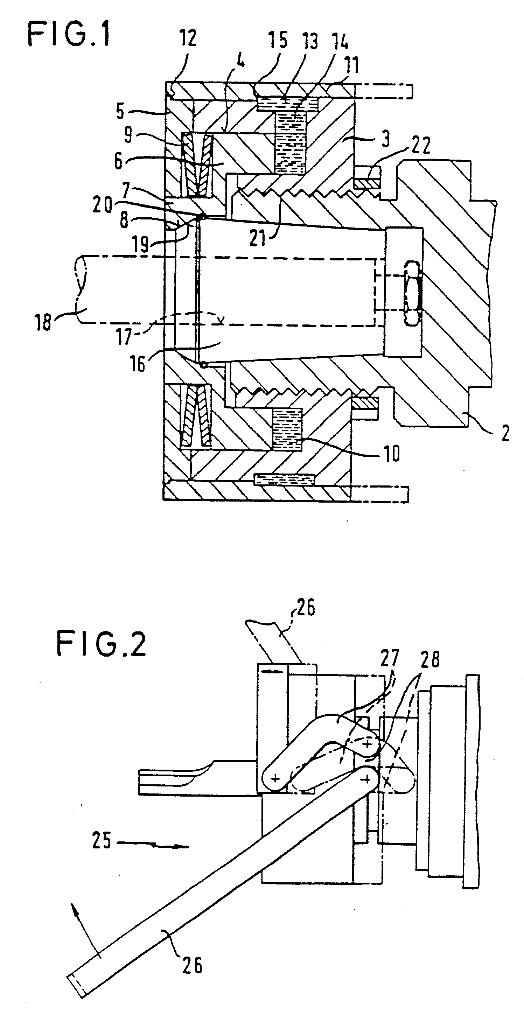

Das in Figur 1 dargestellte Spannfutter ist auf einer Spannzangenaufnahme einer Frässpindel 2 angeordnet. Das Spannfutter 1 besteht dabei im wesentlichen aus einem Ringkörper, mit einer einen Ringzylinderraum 4, der an der offenen Seite über einen scheibenförmigen Deckel 5 abgeschlossen ist. In dem Zylinderraum 4 ist ein Spannringkolben 6 angeordnet, der Z-förmig abgestuft ist, wobei sein innerer Teil im Zylinderraum 4 eingebracht ist, während sein der Achse zu näher liegender Ringschenkel 7 ähnlich einer Kolbenstange wirkend aus dem Zylinderraum herausgeführt ist. Der Ring Schenkel 7 weist an seiner Innenmantelfläche eine nach innen in das Innere des Spannfutters gerichtete konische Spannfläche 8 auf. Zwischen dem Deckel 5 und der dem Deckel zugekehrten Stirnfläche des Spannringkolbens 6 sind Tellerfedern 9 angeordnet, welche den Kolben 6 in Spannstellung eingerückt halten. Zwischen der dem Deckel 5 abgewandten Stirnfläche des Kolbens 6 und der Innenstirnfläche des Zylinderraumes 4 befindet sich ein Arbeitsraum 10. Auf der äußeren Mantelfläche des Ringkörpers 3 ist ein zylindrischer Entspanndruckring 11 axial verschieblich angeordnet. Der Verschiebeweg des Druckringes 11 ist nach der einen Seite hin über eine jeweils im Druckring 11 und im Deckel 5 vorgesehene Schulter 12 begrenzt. In der äußeren Mantelfläche des Ringkörpers 3 ist ein Ringraum 13 eingearbeitet, welcher über mindestens eine Verbindungsöffnung 14 mit dem Arbeitsraum 10 verbunden ist. Der Druckring 11 weist an seiner inneren Zylinderfläche eine Abstufung 15 auf, welche bei axialer Verschiebung des Druckringes 11 das Volumen des Ringraumes 13 verändert, also je nach Bewegungsrichtung vergrößert oder verkleinert. Die Räume 10, 13 und 14 sind mit einem plastischen Druckmedium ausgefüllt und bilden zusammen mit der Abstufung 15 eine hydraulische Übersetzung, wodurch bei einer geringen Verschiebekraft am Druckring 11 eine Kraftverstärkung an den Ringkolben 6 übermittelt wird, durch welche die Tellerfedern zusammengedrückt werden. In der Spannzangenaufnahme der Frässpindel 2 ist eine Spannzange 16 angeordnet, welche eine innere zylindrische Aufnahmebohrung 17 aufweist, in welche ein Werkzeugschaft 18 eingefügt ist. Die Spannzange 16 ist an ihrem äußeren Mantel entsprechend der konischen Spannzangenaufnahme mit der gleichen Konizität versehen. An ihrem vorderen Ende, dem Einführungsende ist die Mantelfläche mit einem dem Aufnahmekonus gegensinnig ausgerichteten und die gleiche Konizität wie die Spannfläche aufweisenden Konus 19 ausgerüstet. Zwischen der Innenseite des Ringschenkels 7 des Kolbens 6 und der vorderen Außenfläche der Spannzange 16 ist ein Mitnahmering 20 angeordnet, der den Kolben 6 und Spannzange 16 verbindet, so daß bei Entspannbewegung des Kolbens 6 die Spannzange 16 aus der Aufnahme 2 mitgenommen wird, wodurch der Schaft aus der Spannumgreifung gelöst wird.

Der Ringkörper 3 weist an seiner Innenfläche ein Innengewinde 21 auf, welches auf dem Außengewinde der Spannzangenaufnahme 2 aufgeschraubt ist. Eine Kontermutter 22 sorgt dafür, daß die Schraubverbindung zwischen Körper 3 und Aufnahme 2 sich nicht ungewollt löst.

In Figur 2 ist eine Hebeleinrichtung 25 dargestellt, welche der manuellen Betätigung des erfindungsgemäßen Spannfutter dient. Die Hebelvorrichtung besteht im wesentlichen aus einem Betätigungsarm 26 und weiteren miteinander verbundenen Hebeln 27 und 28, durch welche bei Verschwenken des Armes 26 den Entspannungsdruckring 11 axial verschieben, wodurch das Spannfutter entspannt wird. Bei Freilassen des Armes 26 drückt die Feder 9 den Druckring 11 wieder zurück, wodurch der Arm 26 selbsttätig wieder in die gespannte Ausgangsposition zurückverschwenkt wird.

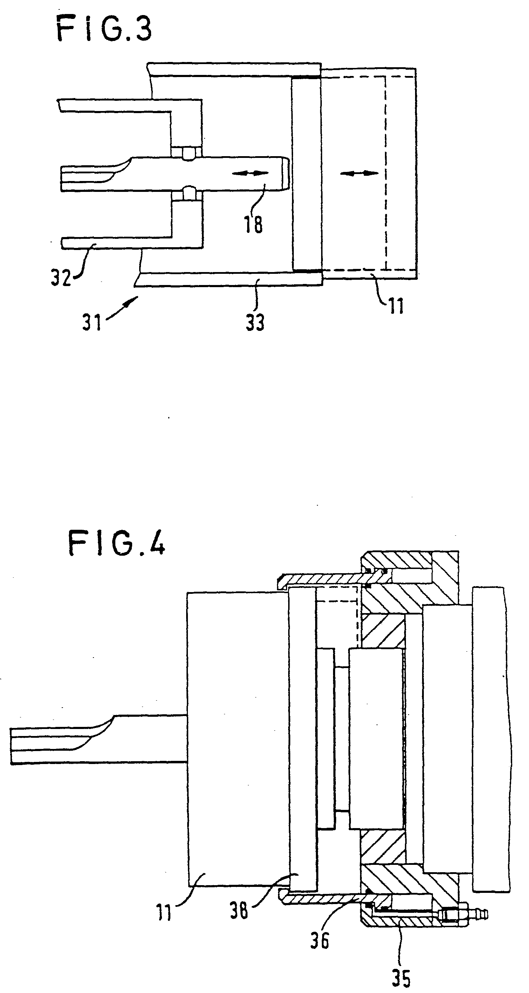

In Figur 3 ist die Betätigung des Schnellspannfutters mit Hilfe einer Werkzeugwechselvorrichtung 31 dargestellt. Die Werkzeugwechselvorrichtung 31 ist hier ein stationäres Magazin, mit einer Magazinaufnahme 32, in welcher die Werkzeuge mit ihrem Schaft 18 nach oben bzw. in Richtung zu der Maschinenachse hin zeigend, aufgenommen sind. Am Maschinenmagazin ist als Verschiebeeinrichtung eine feste Hülse 33 angeordnet, so daß beim Absenken des Schnellspannfutters zur Aufnahme des Werkzeuges der Entspannungsring 11 des Schnellspannfutters durch die Hülse 33 verschoben und somit die Spannzange 16 für die Aufnahme des Schaftes 18 geöffnet wird.

Figur 4 zeigt eine pneumatische Betätigung des erfindungsgemäßen Spannfutters mit Hilfe eines am Spindelgehäuse angeflanschten Zylinders 35. Der Zylinder 35 ist als Ringzylinder ausgebildet, dessen Kolben 36 aus dem Zylinder axial herausragt und eine Schulter 35 des Druckringes 11 umgreift. Soll das Schnellspannfutter entspannt werden, wird Druckluft dem Zylinder zugeführt, wodurch der Kolben zurückgezogen und damit gleichzeitig der Druckring 11 axial verschoben wird.

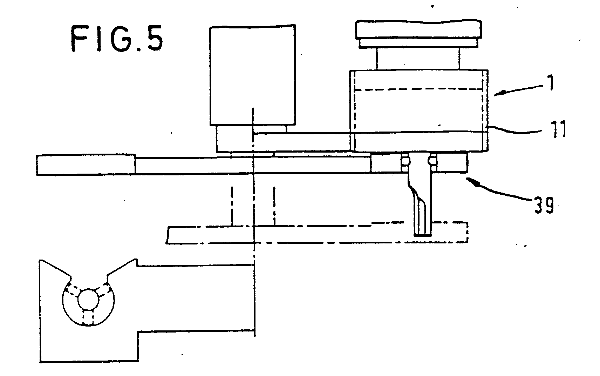

Figur 5 zeigt ein Schnellspannfutter 1, mit einer mechanischen Wechselvorrichtung 39, die einen Schwenkarm mit zwei Aufnahmen besitzt und die für NC-Maschinen angepaßt ist. Die mechanische Betätigung wird dabei durch Verfahren der vertikalen NC-Achse nach unten gegen das feststehende Werkzeugmagazin vorgenommen, wodurch ebenfalls ein axiales Verschieben des Druckringes 11 stattfindet.

## Patentansprüche

1. Spannfutter für Holzbearbeitungswerkzeuge mit zylindrischen Schäften, mit einer in einer Werkzeugaufnahme (2) beweglichen Spannzange (16) und einem die Spannzange (16) in die Aufnahme (2) gedrückt haltenden und aus dieser lösenden Bauteil (6), dadurch gekennzeichnet, daß die Spannzange (16) eine zylindrische Aufnahmebohrung (17) aufweist, daß zum Spannen der Spannzange eine axial wirksame Feder (9) vorgesehen ist, durch welche die Spannzange (16) in die Aufnahme (2) gedrückt ist, daß zum Entspannen der Federkraft entgegengesetzt gewirkt und die Spannzange aus der Aufnahme (2) geschoben wird.

2. Spannfutter nach Anspruch 1, dadurch gekennzeichnet, daß die Feder (9) sind das Bauteil (6) Teil eines Ringzylinders (3, 5) sind, der in Art einer Überwurfmutter auf der Spannzangenaufnahme (2) durch Aufschrauben befestigt ist.

3. Spannfutter nach Anspruch 2, dadurch gekennzeichnet, daß der Ringzylinder einen Ringkörper (3) aufweist, in dem ein Ringzylinderraum (4) vorgesehen ist, in welchem ein mit der Spannzange (16) zusammenwirkender Spannringkolben (6) axial beweglich angeordnet ist, daß der Ringzylinder an seiner offenen Seite über einen Deckel (5) verschlossen ist, wobei im Zylinderraum (4) zwischen Deckel (5) und Spannringkolben (6) die Feder (9) angeordnet ist, und daß ein mit dem Ringkolben (6) zusammenwirkender, axial verschiebbarer Entspannungsdruckring (11) vorgesehen ist.

4. Spannfutter nach Ansprüchen 2 und 3, dadurch gekennzeichnet, daß der Entspannungsdruckring (11) als ein auf dem Mantel des Ringkörpers (3) axial verschiebbarer und auf die der Feder (9) abgewandten Fläche des Ringkolbens (6) einwirkender Zylinder ausgebildet ist.

5. Spannfutter nach den Ansprüchen 2 bis 4, dadurch gekennzeichnet, daß zwischen Entspannungsdruckring (11) und Spannringkolben (6) eine hydraulische Übersetzung vorgesehen ist.

6. Spannfutter nach Anspruch 5, dadurch gekennzeichnet, daß an der Innenfläche des Entspannungsdruckringes (11) eine als Druckkolben wirkende Abstufung (15) vorgesehen ist.

7. Spannfutter nach Anspruch 5, dadurch gekennzeichnet, daß zwischen Entspanndruckring (11) und Spannringkolben (6) eine mechanische Kraftübertragungsanordnung vorgesehen ist.

8. Spannfutter nach Anspruch 1 und mindestens einem der nachfolgenden Ansprüche, dadurch gekennzeichnet, daß die Feder (9, 46) ein Tellerfeder-Paket ist.

## Claims

1. Chuck for woodworking tools having cylindrical shafts, comprising a collet (16) movable in a tool carrier (2) and a component (6) for holding the collet (16) firmly in the carrier (2) and releasing it therefrom, characterised in that the collet (16) has a cylindrical receiving bore (17), in that for tightening the collet an axially effective spring (9) is provided by which the collet (16) is pressed into the carrier (2), in that for untightening the spring force is reversed and the collet is pushed out of the carrier (2).

2. Chuck according to claim 1 characterised in that the spring (9) and the component (6) are part of a ring cylinder (3, 5) which is secured by screwing in the manner of a union nut onto the collet carrier (2).

3. Chuck according to claim 2 characterised in that the ring cylinder has a ring body (3) in which is provided an annular cylindrical chamber (4) in which an annular clamping piston (6) co-operating with the collet (16) is arranged for axial movement, in that the ring cylinder is closed on its open side by a cover (5), the spring (9) being arranged in the cylindrical chamber (4) between the cover (5) and the annular clamping piston (6), and in that an axially displaceable release thrust collar (11) is provided which co-operates with the annular piston (6).

4. Chuck according to claims 2 and 3 characterised in that the release thrust collar (11) is constructed as a cylinder which is axially displaceable on the wall of the ring body (3) and acts on the surface of the annular piston (6) facing away from the spring (9).

5. Chuck according to claims 2 to 4 characterised in that between the release thrust collar (11) and the annular clamping piston (6) a hydraulic transmission is provided.

6. Chuck according to claim 5 characterised in that on the inner surface of the release thrust collar (11) there is provided a step (15) acting as thrust piston.

7. Chuck according to claim 5 characterised in that between the release thrust collar (11) and the annular clamping piston (6) there is provided a mechanical power transmission arrangement.

8. Chuck according to claim 1 and at least one of the following claims characterised in that the spring (9, 46) is a cup spring stack.

## Revendications

1. Mandrin de serrage pour outils pour le travail du bois, à tiges cylindriques, avec une pince de serrage (16), mobile dans un cône de positionnement d'outil (2), et avec un composant (6), maintenant la pince de serrage (16) comprimée dans le cône de positionnement (2) et pouvant s'en détacher, caractérisé en ce que la pince de serrage (16) présente un trou de positionnement cylindrique (17) ; que, pour le serrage de la pince de serrage, il est prévu un ressort à effet axial (9) par lequel la pince de serrage (16) est comprimée dans le cône de positionnement (2) ; et que, pour le desserrage, on provoque une force opposée à la force du ressort, la pince de serrage étant extraite du cône de positionnement (2).

2. Mandrin de serrage selon la revendication 1, caractérisé en ce que le ressort et le composant (6) font partie d'un cylindre annulaire (3, 5), qui, sous la forme d'un écrou à chapeau, est fixé par vissage sur le cône de positionnement de la pince de serrage (2).

3. Mandrin de serrage selon la revendication 2, caractérisé en ce que le cylindre annulaire présente un corps annulaire (3), dans lequel est prévu un espace cylindrique annulaire (4), dans lequel est disposé, de façon à pouvoir subir un déplacement axial, un piston annulaire de serrage (6), coopérant avec la pince de serrage (16) ; que le cylindre annulaire est, sur son côté ouvert, obturé par un couvercle (5), le ressort (9) étant disposé dans l'espace cylindrique (4) entre le couvercle (5) et le piston annulaire de serrage (6) ; et qu'il est prévu une bague de compression de desserrage (11), coopérant avec le piston annulaire (6) et pouvant se déplacer axialement.

4. Mandrin de serrage selon les revendications 2 et 3, caractérisé en ce que la bague de compression de desserrage (11) est réalisée sous la forme d'un cylindre, pouvant se déplacer axialement sur la surface latérale du corps annulaire (3), et agissant sur la surface, opposée au ressort (9), du piston annulaire (6).

5. Mandrin de serrage selon les revendications 2 à 4, caractérisé en ce qu'il est prévu une transmission hydraulique entre la bague de compression de desserrage (11) et le piston annulaire de serrage (6).

6. Mandrin de serrage selon la revendication 5, caractérisé en ce qu'il est prévu sur la surface intérieure de la bague de compression de desserrage (11) un étagement (15) agissant comme un piston de compression.

7. Mandrin de serrage selon la revendication 5, caractérisé en ce qu'il est prévu entre la bague de compression de desserrage (11) et le piston annulaire de serrage (6) un dispositif de transfert mécanique de force.

8. Mandrin de serrage selon la revendication 1 et au moins l'une des revendications suivantes, caractérisé en ce que le ressort (9, 46) forme un paquet de rondelles-ressorts.

FIG.1

FIG.2

## FIG.3

## FIG.4

FIG.5

1

11

39